# EUROPEAN PATENT SPECIFICATION

(11) **EP 2 484 733 B1**
(45) Date of publication and mention of the grant of the patent: **12.04.2017**
(21) Application number: 12151654.6
(22) Date of filing: 19.01.2012
(51) Int. Cl.: C09J 7/02

(54) **Pressure-sensitive adhesive tape**
Druckempfindliches Klebeband
Bande adhésive sensible à la pression

(30) Priority: 20.01.2011 JP 2011010136; 24.05.2011 JP 2011116220
(43) Date of publication of application: 08.08.2012
(73) Proprietor: Nitto Denko Corporation, Ibaraki-shi, Osaka 567-8680 (JP)
(72) Inventor: Jozuka, Kenta, Ibaraki-shi, Osaka 567-8680 (JP); Yoshida, Noboru, Ibaraki-shi, Osaka 567-8680 (JP); Mizutori, Takahisa, Ibaraki-shi, Osaka 567-8680 (JP)
(74) Representative: Grünecker Patent- und Rechtsanwälte PartG mbB

(56) References cited:
- EP-A1- 1 520 896
- WO-A1-2008/128869
- US-A1- 2010 255 253
- Wolfgang Türk: "Seide Dokumentkennung RD-19-01696", RÖMPP Online, Version 3.24, 1 July 2009 (2009-07-01), pages 1-5, XP55031246, Retrieved from the Internet: URL:http://www.roempp.com/prod/roempp.php [retrieved on 2012-06-27]

## Description

The present invention relates to a pressure-sensitive adhesive tape as defined in claim 1 , and in particular, to a pressure-sensitive adhesive tape to be preferably used in a joint portion of a case or a part during the manufacture (assembly) of various office automation equipment or electronic parts.

In recent years, miniaturization of mobile devices, such as mobile phones, digital cameras, and PDAs (Personal Digital Assistants), has been progressing. Accordingly, it is also sought that the various electronic parts to be mounted therein will be miniaturized and thinned. For example, mobile phones, typical equipment as mobile devices, are in the trend that each of the maj or parts of which a mobile phone is composed is laminated. Usually, the display portion of a mobile phone is mainly composed of an LCD module and a backlight unit, and various sheet-shaped parts are laminated to exert functions, such as light-emission, -reflection, -shielding, and -guiding. Therefore, pressure-sensitive adhesive tapes to be used in the assembly (joining) of these parts have been devised.

### [Patent Document]

[Patent Document 1] Japanese Patent Application Publication No. 2005-105212
WO 2008/128869 A1 discloses a pressure-sensitive adhesive tape comprising a backing film layer and to pressure-sensitive composition layers, characterized by a total thickness (average value) of less than 30 µm and a standard deviation of the total thickness of less than 1.25 µm.
EP 1520896 A1 discloses a double-sided pressure-sensitive adhesive tape or sheet comprising a support having a pressure-sensitive adhesive layer on both surfaces thereof, characterized in that the double-sided pressure-sensitive adhesive tape or sheet has a total thickness including the thickness of the support and the two adhesive layers formed on both surfaces of the support of from 4 to 30 µm.
US 2010/255253 A1 discloses a double-sided pressure-sensitive adhesive sheet including adhesive layers formed from an acrylic polymer, wherein the adhesive layer has a thickness unevenness of the whole surface of 0.03 µm or less.

With the thinning of the electronic parts to be mounted in mobile devices, it is required that an extremely-thin pressure-sensitive adhesive tape having a thickness of 10 µm or less is used in a site required to have a further extremely-thin layer structure. However, in a conventional extremely-thin pressure-sensitive adhesive tape having a substrate layer and a pressure-sensitive adhesive layer, pressure-sensitive adhesive force varies depending on places, and hence it is difficult to obtain stable adhesiveness.

The present invention has been made in view of these problems, and a purpose of the invention is to provide an extremely-thin pressure-sensitive adhesive tape having a substrate layer and a pressure-sensitive adhesive layer, in which a variation in the pressure-sensitive adhesive force, occurring depending on places, is suppressed, and hence the stability of the pressure-sensitive adhesive force is improved.

### Means for Solving the Problems

An embodiment of the present invention is a pressure-sensitive adhesive tape, wherein the total thickness of a plastic or metal substrate layer and a pressure-sensitive adhesive layer is such that 2 µm ≤ total thickness ≤ 10 µm, and wherein the average thickness of the pressure-sensitive adhesive layer is such that 1 µm ≤ average thickness ≤ 3.5 µm, and wherein the standard deviation of the thickness of the pressure-sensitive adhesive layer, obtained by measuring the total thickness of the pressure-sensitive adhesive tape at least at 96 places, namely, at places in each of 48 divisions obtained by dividing the longitudinal direction of the pressure-sensitive tape having a size of 480 mm in width x 1000 m in length into 8 intervals and further by dividing the width direction of each interval into 6 intervals so that each division has a size of 80 mm in width x 125 m in length, is 25% or less the average thickness of the pressure-sensitive adhesive layer, wherein the pressure-sensitive adhesive layer is made of a pressure-sensitive composition containing a (meth)acrylic polymer and a crosslinking agent, wherein the (meth)acrylic polymer contains, as monomer components, a (meth)acrylic monomer with an alkyl group having 1 to 14 carbon atoms as a major component, a carboxyl group-containing monomer, and a hydroxyl group-containing monomer, and wherein the (meth) acrylic monomer with an alkyl group having 1 to 14 carbon atoms contains a (meth)acrylic monomer with an acrylic group having 1 to 4 carbon atoms in an amount within a range of 40 to 80% by mass, based on the total mass of the (meth)acrylic polymer with an alkyl group having 1 to 14 carbon atoms.
In the above pressure-sensitive adhesive tape, the total thickness of a substrate layer and a pressure-sensitive adhesive layer is 10 µm or less, the average thickness of the pressure-sensitive adhesive layer is 3.5 µm or less, and the standard deviation of the thickness of the pressure-sensitive adhesive layer is 25% or less based on the average thickness of the pressure-sensitive adhesive layer.

According to the pressure-sensitive adhesive tape of this embodiment, a variation in the pressure-sensitive adhesive force, occurring depending on places, can be suppressed, and hence the stability of the pressure-sensitive adhesive force can be improved, although the total thickness of a substrate later and a pressure-sensitive adhesive layer is 10 µm or less. Accordingly, adhesion reliability can be sufficiently obtained in an adhesion site in an extremely-thin layer structure in which adhesion has been difficult with a conventional pressure-sensitive adhesive tape, thereby contributing to further miniaturization of mobile devices.

In the pressure-sensitive adhesive tape according to the aforementioned embodiment, the substrate layer may be a plastic substrate. The pressure-sensitive adhesive layer is an acrylic pressure-sensitive adhesive layer containing an acrylic polymer. Or, the pressure-sensitive adhesive layer may contain a tackifier resin. Or, the pressure-sensitive adhesive layer may be an acrylic pressure-sensitive adhesive layer containing an acrylic polymer and a tackifier resin, and the content of the tackifier resin may be within a range of 5 to 50 parts by mass based on 100 parts by mass of the resin solid in the acrylic pressure-sensitive adhesive. The tackifier resin may be a rosin tackifier resin. The total thickness of the substrate layer and the pressure-sensitive adhesive layer may be less than 5 µm. The pressure-sensitive adhesive layers may be provided on both sides of the substrate layer. The pressure-sensitive adhesive tape according to any one of the aforementioned embodiments may be used for fixing a part of a mobile electronic device.
Fig. 1 is a partial sectional view of a pressure-sensitive adhesive tape according to an embodiment;
Fig. 2 is a schematic view of a coating apparatus used when the pressure-sensitive adhesive tape according to the embodiment is manufactured;
Fig. 3 is a partially enlarged view illustrating a state where a coating liquid is being discharged by the coating apparatus used when the pressure-sensitive adhesive tape according to the embodiment is manufactured; and
Fig. 4 is a graph illustrating detection frequencies of the thickness of a pressure-sensitive adhesive layer in each of the pressure-sensitive adhesive tapes according to Example 1 and Comparative Examples 1 and 2.

### Reference Numerals

- 1: COATING APPARATUS
- 2: SUPPORT BODY
- 3: COATING LIQUID
- 4: DIE COATER
- 5: VACUUM BOX
- 10: PRESSURE-SENSITIVE ADHESIVE TAPE
- 20: SUBSTRATE LAYER
- 30: PRESSURE-SENSITIVE ADHESIVE LAYER

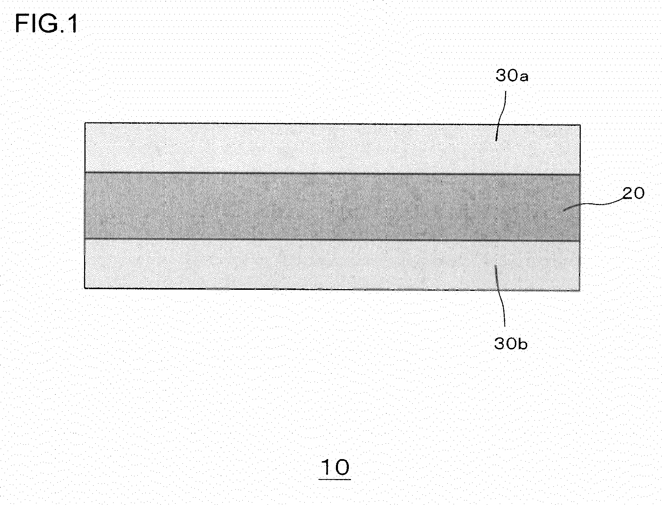

Fig. 1 is a partial sectional view of a pressure-sensitive adhesive tape according to an embodiment. The pressure-sensitive adhesive tape 10 according to the embodiment comprises: a substrate layer 20; and pressure-sensitive adhesive layers 30a and 30b (pressure-sensitive adhesive layers 30a and 30b are sometimes not distinguished from each other, and collectively referred to as a pressure-sensitive adhesive layer 30) provided on both sides of the substrate layer 20, respectively. Hereinafter, the configuration of the pressure-sensitive adhesive tape according to the embodiment will be described in detail.

(Substrate Layer)

Materials of the substrate layer 20 include plastic materials and metallic materials. As the material of the substrate layer 20, plastic materials are preferred. That is, as the substrate layer 20, plastic films (plastic substrates) can be preferably used.

As such the plastic materials (materials of plastic films), various engineering plastic materials can be preferably used. Specific examples of the plastic materials include, for example: polyesters [polyethylene terephthalate (PET), polyethylene naphthalate (PEN), polybutylene terephthalate (PBT), etc.], olefin resins [olefin resins, etc., whose monomer components are α-olefins, such as polyethylene (PE), polypropylene (PP), ethylene-propylene copolymer, and ethylene-vinyl acetate copolymer (EVA), etc.], polyethersulfone (PES) (polyether sulphone), polysulfone, polyvinyl chloride (PVC), polyphenylene sulfide (PPS), amide resins [polyamide (nylon), all aromatic polyamides (aramid), etc.], polyimide (PI), polyamide imide, polyetherimide (PEI), polyesterimide, methacrylate resins [polymethylmethacrylate) (PMMA), etc.], styrene resins [polystyrene, acrylonitrile-styrene copolymer (AS resin), acrylonitrile-butadiene-styrene copolymer (ABS resin), etc.], polycarbonate (PC), polyacetal, polyarylene ether (polyphenylene ether, etc.), polyphenylene sulfide, polyarylate, polyaryl, polyurethanes, polyether ketones [polyether ether ketone (PEEK), polyether ketone ketone, etc.], polyacrylic acid esters (polybutyl acrylate, polyethyl acrylate, etc.), and epoxy resin, etc. These materials (plastic materials) can be used alone or in combination of two or more thereof.

As the plastic material, in particular, polyesters (among them, polyethylene terephthalate) can be preferably used in terms of thickness accuracy, tensile strength, and processability, etc. That is, as the substrate layer, in particular, polyester films (among them, a polyethylene terephthalate film) can be preferably used.

The surface of the substrate layer 20 (in particular, the surface of the substrate layer made of a plastic material) may be subjected to a commonly-used surface treatment, for example, a chemical or physical oxidation treatment, such as a chromic acid treatment, ozone exposure, flame exposure, high-pressure electrical-shock exposure, ionization radiation treatment, or the like, in order to enhance the adhesiveness with the pressure-sensitive adhesive layer 30 formed on the substrate layer 20. Alternatively, the surface of the substrate layer 20 may be subjected to a coating treatment by an undercoat agent.

The substrate layer may have a single layer mode or a laminated layer mode, and a structural constraint is not imposed thereon.

### (Pressure-Sensitive Adhesive Layer)

A pressure-sensitive adhesive of which the pressure-sensitive adhesive layer 30 is formed from an acrylic pressure-sensitive adhesive.

As the pressure-sensitive adhesive, in particular, an acrylic pressure-sensitive adhesive is used in terms of adhesion reliability. The acrylic pressure-sensitive adhesive contains an acrylic polymer as an pressure-sensitive adhesive component (base polymer) or a major agent, a cross-linking agent, and further contains appropriate additives, such as, tackifier, softener, plasticizer, filler, anti-aging agent, and colorant, if necessary. The acrylic polymer is prepared by using alkyl(meth)acrylate ester as a monomer major component and further by using, if necessary, a monomer (copolymeric monomer) that can be copolymerized with the alkyl(meth)acrylate ester.

The acrylic pressure-sensitive adhesive layer is made of a pressure-sensitive adhesive composition containing a (meth) acrylic polymer and a cross-linking agent, wherein the aforementioned (meth) acrylic polymer contains, as a major component, a (meth)acrylic monomer with an alkyl group having 1 to 14 carbon atoms. The number of the carbon atoms is preferably within a range of 1 to 12, and more preferably within a range of 2 to 10. By using a (meth) acrylic monomer in which the number of carbon atoms is within the aforementioned range, the initial adhesiveness and the adhesiveness in a low-temperature environment, such as in winter, can be secured. It is particularly preferable to contain a (meth) acrylic monomer with an alkyl group having 1 to 4 carbon atoms as a major component. Further, the aforementioned (meth) acrylic monomer with an acrylic group having 1 to 4 carbon atoms is contained in an amount within a range of 40 to 80% by mass, and it is preferable to contain it in an amount within a range of 50 to 75% by mass, based on the total mass of the (meth) acrylic polymer with an alkyl group having 1 to 14 carbon atoms. By using the aforementioned (meth) acrylic monomer with an acrylic group having 1 to 4 carbon atoms in an amount within the aforementioned range, an acrylic pressure-sensitive adhesive tape becomes effective, because the cohesive force of a pressure-sensitive adhesive can be improved and adhesive deposit, possibly occurring when released after use, can be prevented.

Examples of the aforementioned (meth) acrylic monomer with an acrylic group having 1 to 14 carbon atoms include, for example: methyl (meth)acrylate, ethyl (meth)acrylate, propyl (meth)acrylate, n-butyl (meth)acrylate, isobutyl (meth)acrylate, sec-butyl (meth)acrylate, t-butyl (meth)acrylate, hexyl (meth)acrylate, cyclohexyl (meth)acrylate, t-butyl cyclohexyl (meth)acrylate, 2-ethylhexyl methacrylate, isoamyl (meth)acrylate, n-pentyl (meth)acrylate, isopentyl (meth)acrylate, cyclopentyl (meth)acrylate, n-octyl (meth)acrylate, isooctyl (meth)acrylate, cyclooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, etc. Among them, ethyl (meth)acrylate, n-butyl (meth)acrylate, isobutyl (meth)acrylate, sec-butyl (meth)acrylate, t-butyl (meth)acrylate, etc., are preferably used.

In the present embodiment, the aforementioned (meth) acrylic monomer with an alkyl group having 1 to 14 carbon atoms may be used alone or in combination of two or more thereof. It is preferable that the content thereof is within a range of 40 to 90% by mass, and more preferable that the content is within a range of 50 to 80% by mass, based on the mass of the whole monomers. If the content is more than 90% by mass, the cohesive force of a pressure-sensitive adhesive is sometimes remarkably decreased, or if the content is less than 40% by mass, a decrease in the initial adhesiveness may be caused, which is not preferred.

The aforementioned (meth) acrylic polymer contains another monomer component within a range in which the performance of the pressure-sensitive adhesive tape 10 is not impaired, other than the aforementioned (meth) acrylic monomer with an alkyl group having 1 to 14 carbon atoms. A hydroxyl group-containing monomer is used. By using the aforementioned hydroxyl group-containing monomer, a pressure-sensitive adhesive tape becomes effective because the cross-linking property with a cross-linking agent is increased and adhesive deposit can be prevented. Examples of the aforementioned hydroxyl group-containing monomer include, for example, 2-hydroxyethyl (meth)acrylate, 2-hydroxypropyl (meth)acrylate, 4-hydroxy butyl (meth)acrylate, 2-hydroxyhexyl (meth)acrylate, 6-hydroxyhexyl (meth)acrylate, 8-hydroxy octyl (meth)acrylate, 10-hydroxydecyl (meth)acrylate, 12-hydroxylauryl (meth)acrylate, (4-hydroxymethylcyclohexyl)-methyl acrylate, N-methylol(meth)acrylamide, N-hydroxy(meth)acrylamide, vinyl alcohol, allyl alcohol, 2-hydroxyethyl vinyl ether, 4-hydroxybutyl vinyl ether, and diethylene glycol monovinyl ether, etc. Among them, 2-hydroxyethyl (meth)acrylate and 2-hydroxyhexyl (meth)acrylate, etc., can be preferably used.

In the present embodiment, the aforementioned hydroxyl group-containing monomers may be used alone or in combination of two or more thereof. It is preferable that the content thereof is within a range of 1 to 30% by mass, more preferable that the content is within a range of 2 to 20% by mass, and particularly preferable that the content is within a range of 3 to 10% by mass, based on the mass of the whole monomers. If the content is more than 30% by mass, the initial adhesiveness is sometimes decreased, or if the content is less than 1% by mass, a decrease in the cohesive force of a pressure-sensitive adhesive is caused, which is not preferred.

Further, the aforementioned (meth) acrylic polymer contains a vinyl monomer that can be polymerized with the aforementioned (meth) acrylate with an alkyl group having 1 to 14 carbon atoms and the hydroxyl group-containing monomer. A component that improves cohesive force or heat resistance property, i.e. a carboxyl group-containing monomer, is appropriately used.

Examples of the aforementioned carboxyl group-containing monomer include, for example, acrylic acid, methacrylic acid, carboxyethyl (meth)acrylate, carboxypentyl (meth)acrylate, itaconic acid, maleic acid, fumaric acid, and crotonic acid, etc. Among them, acrylic acid and methacrylic acid are preferably used.

In the present embodiment, vinyl monomers that can be polymerized may be used alone or in combination of two or more thereof. It is preferable that the content thereof as a whole is within a range of 10 to 50% by mass, and more preferable that the content thereof is within a range of 20 to 40% by mass, based on the mass of the whole monomer components of the (meth) acrylic polymer. If the content is more than 50% by mass, the initial adhesiveness is sometimes decreased, or if the content is less than 10% by mass, the cohesive force of a pressure-sensitive adhesive is sometimes decreased remarkably, which is not preferred.

In terms of easily balancing the pressure-sensitive adhesive performance, the glass transition temperature (Tg) of the aforementioned (meth) acrylic polymer is 0°C or lower (normally -100°C or higher), preferably -10°C or lower, and more preferably -20°C or lower. If the glass transition temperature is higher than 0°C, the polymer becomes resistant to flow and hence the wetting of an adherend is insufficient, thereby presenting the tendency that a blister may be caused between the adherend and the pressure-sensitive adhesive layer 30. The glass transition temperature (Tg) of the (meth) acrylic polymer can be adjusted so as to be within the aforementioned range by appropriately changing monomer components to be used or a composition ratio. A commonly-used value may be adopted as the glass transition temperature (Tg) (°C), and the numeric values, etc., described in, for example, Chapter VI, section 198-253 of Polymer Handbook Fourth Edition (by J. Brandup, et al., 1999, John Wiley & Sons, Inc), can be adopted. In the case of a new polymer, the peak temperature of a loss tangent (tan δ) in a viscoelasticity measurement method (shearing method, measurement frequency: 1 Hz) may be adopted as the glass transition temperature (Tg).

As the method of manufacturing such the (meth)acrylic polymer, a publicly-known radical polymerization method, such as solution polymerization, bulk polymerization, emulsion polymerization, or the like, can be appropriately selected. The obtained (meth)acrylic polymer may be any one of a random copolymer, block copolymer, and graft copolymer, etc.

In the solution polymerization, a solvent selected from the group consisting of, for example, methyl ethyl ketone, acetone, ethyl acetate, tetrahydrofran, dioxane, cyclohexane, n-hexane, toluene, xylene, mesitylene, methanol, ethanol, n-propanol, isopropanol, water, and various aqueous solutions, can be adopted as the polymerization solvent. The reaction is carried out under the flow of an inert gas, such as nitrogen, and usually at approximately 60°C to 80°C for approximately 4 to 10 hours.

The polymerization initiator and the chain transfer agent, etc., to be used in the radical polymerization are not particularly limited, but the substances appropriately selected can be used.

Examples of the polymerization initiator to be used in the present embodiment include, for example: azo initiators, such as a 2,2'-azobisisobutyronitrile, 2,2'-azobis(2-amidinopropane)dihydrochloride, 2,2'-azobis[2-(5-methyl-2-imidazoline-2-yl)propane]dihydrochl oride, 2,2'-azobis(2-methylpropionamidine)disulfate, 2,2'-azobis(N,N'-dimethyleneisobutylamidine), 2,2'-azobis[N-(2-carboxyethyl)-2-methylpropionamidine]hydrate (made by Wako Pure Chemical Industries, Ltd., VA-057) ; peroxide initiators, such as persulfates including potassium persulfate and ammonium persulfate, etc., di(2-ethylhexyl)peroxidicarbonate, di(4-t-butylcyclohexyl)peroxidicarbonate, di-sec-butylperoxydicarbonate, t-butylperoxy neodecanoate, t-hexyl peroxypivalate, t-butyl peroxypivalate, dilauroyl peroxide, di-n-octanoyl peroxide, 1,1,3,3-tetramethylbutylperoxy-2-ethylhexanoate, di(4-methylbenzoyl)peroxide, dibenzoyl peroxide, t-butylperoxy isobutyrate, 1,1-di(t-hexylperoxy)cyclohexane, t-butyl hydroperoxide, and hydrogen peroxide; redox initiators in each of which a peroxide and a reducing agent are combined togehter, such as a combination of persulfate and sodium hydrogen sulfite and a combination of peroxide and sodium ascorbate, and a reducing agent; and the like. However, the polymerization initiator is not limited thereto.

The aforementioned polymerization initiators may be used alone or in combination of two or more thereof. The content thereof as a whole is preferably within a range of 0. 005 to 1 part by mass, and more preferably within a range of 0.02 to 0.5 parts by mass, based on 100 parts by mass of the monomers.

In the polymerization according to the present embodiment, a chain transfer agent may also be used. The molecular weight of the acrylic polymer can be appropriately adjusted by using the chain transfer agent.

Examples of the chain transfer agent include, for example, lauryl mercaptan, glycidyl mercaptan, mercaptoacetic acid, 2-mercaptoethanol, thioglycolic acid, thioglycolic acid 2-ethylhexyl, and 2,3-dimercapto-1-propanol, etc.

These chain transfer agents may be used alone or in combination of two or more thereof. The content thereof as a whole is within a range of approximately 0.01 to 0.1 parts by mass based on 100 parts by mass of the monomers.

It is possible that the pressure-sensitive adhesive composition to be used in the present embodiment is made to be more excellent in weather resistance and heat resistance, etc. , by cross-linking the aforementioned (meth) acrylic polymer with a cross-linking agent, which is effective. As the cross-linking agent to be used in the embodiment, a compound having, in its molecule, two or more functional groups that can react (can be bound) with the functional groups in the functional groups-containing (meth) acrylic monomer can be used. Examples of the compound include an isocyanate compound, epoxy compound, oxazoline compound, melamine resin, aziridine derivative, and metal chelate compound, etc.

Among them, examples of the isocyanate compound include: aromatic isocyanates, such as tolylene diisocyanate and xylene diisocyanate; alicyclic isocyanates, such as isophorone diisocyanate; aliphatic isocyanates, such as hexamethylene diisocyanate; and emulsified isocyanates, etc.

Examples of more specific isocyanate compounds include: low aliphatic polyisocyanates, such as butylene diisocyanate and hexamethylene diisocyanate; alicyclic isocyanates, such as cyclopentylene diisocyanate, cyclohexylene diisocyanate, and isophorone diisocyanate; aromatic diisocyanates, such as 2,4-tolylene diisocyanate, 4,4'-diphenylmethane diisocyanate, and xylylene diisocyanate; isocyanate adducts, such as trimethylolpropane/tolylene diisocyanate trimeric adduct (made by Nippon Polyurethane Industry Co. , Ltd. , Product Name: CORONATE L), trimethylolpropane/hexamethylene diisocyanate trimeric adduct (made by Nippon Polyurethane Industry Co., Ltd., Product Name: CORONATE HL), and an isocyanurate compound of hexamethylene diisocyanate (made by Nippon Polyurethane Industry Co., Ltd., Product Name: CORONATE HX); self-emulsified polyisocyanate (made by Nippon Polyurethane Industry Co. , Ltd. , Product Name: AQUANATE 200), etc. These isocyanate compounds may be used alone or in Combination of two or more thereof.

Examples of the oxazoline compound include, for example, 2-oxazoline, 3-oxazoline, 4-oxazoline, 5-keto-3-oxazoline, and EPOCROS (made by Nippon Shokubai Co. , Ltd.), etc. These compounds may be used alone or in combination.

Examples of the epoxy compound include, for example, polyglycidyl amine compounds, such as N,N,N',N'-tetraglycidyl-m-xylenediamine (Product Name: TETRAD-X, made by Mitsubishi Gas Chemical Company, Inc.), 1,3-bis(N,N-diglycidyl aminomethyl)cyclohexane (Product Name: TETRAD-C, made by Mitsubishi Gas Chemical Company, Inc.), tetraglycidyl diaminodiphenylmethane, triglycidyl-p-aminophenol, diglycidyl aniline, and diglycidyl-o-toluidine. These compounds may be used alone or in combination.

Examples of the melamine resin include hexamethylolmelamine and a water-soluble melamine resin, etc.

Example of the aziridine derivative include, for example, a compound with a product name of HDU (made by Sogo Pharmaceutical Co, Ltd.), a compound with a product name of TAZM (made by Sogo Pharmaceutical Co, Ltd.), which are commercially available, and the like. These compounds may be used alone or in combination.

Examples of the metallic component of the metal chelate compound include aluminium, iron, tin, titanium, and nickel, etc., and examples of the the chelate component thereof include acethylene, methyl acetoacetate, and ethyl lactate, etc. These compounds may be used alone or in combination.

The content of these cross-linking agents is appropriately selected in terms of the balance with the (meth) acrylic polymer to be cross-linked. In order to acquire sufficient weather resistance and heat resistance by the cohesive force of the (meth) acrylic polymer, the content is preferably within a range of 0.1 to 6 parts by mass, more preferably within a range of 0.2 to 4 parts by mass, and particularly preferably within a range of 0.4 to 2 parts by mass, based on 100 parts by mass of the aforementioned (meth) acrylic polymer. If the content of the cross-linking agent is less than 0.1 parts by mass, there is the tendency that the cross-link formation by the cross-linking agent becomes insufficient and hence the rate of solvent-insoluble matter may be decreased, and there is the tendency that the cohesive force of the pressure-sensitive adhesive layer 30 becomes small and hence adhesive deposit may be caused. On the other hand, if the content thereof is more than 6 parts by mass, there is the tendency that: the initial adhesive force of the pressure-sensitive adhesive layer 30 becomes insufficient, and the cohesive force of the polymer becomes large and the flow property is decreased, and hence the wetting of an adherend becomes insufficient, thereby possibly causing peeling.

A tackifier resin may be added to the aforementioned pressure-sensitive adhesive composition. The tackifier resin is not particularly limited, and those to be used in conventional pressure-sensitive adhesives can be used. Various tackifier resins, such as a rosin tackifier resin, terpene tackifier resin, hydrocarbon tackifier resin, epoxy tackifier resin, polyamide tackifier resin, elastomer tackifier resin, phenol tackifier resin, and ketone tackifier resin, can be used. These tackifier resins can be used alone or in combination of two or more thereof. Among them, rosin tackifier resins are preferred in terms of adhesiveness, in particular, adhesiveness to a curved surface. Among them, rosin esters are particularly preferred, and polymerized rosin ester resins are further preferred.

Specific examples of the rosin tackifier resin include, for example: unmodified rosins (raw rosins), such as gum rosin, wood rosin, and tall oil rosin; modified rosins in which the above unmodified rosins have been modified by hydrogenation, disproportionation, and polymerization, etc., (hydrogenated rosins, disproportionated rosins, polymerized rosins, and other chemically-modified rosins, etc.); other various rosin derivatives; and the like. Examples of the aforementioned rosin derivatives include, for example: rosin esters, such as a substance in which an unmodified rosin has been esterified with alcohols (i.e., esterified rosin), and a substance in which a modified rosin (a hydrogenated rosin, disproportionated rosin, polymerized rosin, or the like) has been esterified with alcohols (i.e., esterified modified rosin); unsaturated fatty acid modified rosins in which unmodified rosins or modified rosins (hydrogenated rosins, disproportionated rosins, and polymerized rosins, etc.) have been modified with fatty acids; unsaturated fatty acid modified rosin esters in which rosin esters have been modified with unsaturated fatty acids; rosin alcohols in which the carboxyl groups in unmodified rosins, modified rosins(hydrogenated rosins, disproportionated rosins, and polymerized rosins, etc.), unsaturated fatty acid modified rosins, or unsaturated fatty acid modified rosin esters, have been subjected to a reduction treatment; metallic salts of rosins (in particular, rosin esters), such as unmodified rosins, modified rosins, and various rosin derivatives; rosin phenol resins obtained by adding phenol to rosins (unmodified rosins, modified rosins, and various rosin derivatives, etc.) with an acid catalyst to be thermally polymerized; and the like. Examples of the terpene tackifier resin include, for example: terpene resins, such as α-pinene polymer, β-pinene polymer, and dipentene polymer; modified terpene resins in which the above terpene resins have been modified (phenol modification, aromatic modification, hydrogenation modification, hydrocarbon modification, etc.); and the like. As the aforementioned modified terpene resins, terpene-phenol resins, styrene modified terpene resins, aromatic modified terpene resins, and hydrogenation terpene resins, etc. , are exemplified.

Examples of the hydrocarbon tackifier resins include, for example, various hydrocarbon resins, such as aliphatic hydrocarbon resins, aromatic hydrocarbon resins, aliphatic cyclic hydrocarbon resins, aliphatic and aromatic petroleum resins (styrene-olefin copolymers, etc.), aliphatic and alicyclic petroleum resins, hydrogenated hydrocarbon resins, cumarone resins, and cumarone indene resins. As the aliphatic hydrocarbon resins, polymers of one or more aliphatic hydrocarbons selected from the olefins or dienes having approximately 4 or 5 carbon atoms are exemplified. Examples of the aforementioned olefins include 1-butene, isobutylene, and 1-pentene, etc. Examples of the aforementioned dienes include butadiene, 1,3-pentadiene, isoprene, etc. As the aromatic hydrocarbon resins, polymers of vinyl group-containing aromatic hydrocarbons each having approximately 8 to 10 carbon atoms (styrene, vinyl toluene, α-methylstyrene, indene, and methylindene, etc.) are exemplified. As the aliphatic cyclic hydrocarbon resins, alicyclic hydrocarbon resins in each of which so-called "C4 petroleum fractions" or "C5 petroleum fractions" have been cyclized and dimerized and then polymerized; polymers or hydrogenated polymers of cyclic diene compounds (cyclopentadiene, dicyclopentadiene, ethylidene norbornene, and dipentene, etc.); alicyclic hydrocarbon resins in each of which the aromatic ring of an aromatic hydrocarbon resin or an aliphatic and aromatic petroleum resin has been subjected to hydrogenation; and the like, are exemplified.

In the technique disclosed herein, a tackifier resin having a softening point (softening temperature) of approximately 80°C or higher (preferably higher than or equal to approximately 100°C or higher) can be preferably used. According to such a tackifier resin, a pressure-sensitive adhesive sheet having more excellent performance (i.e., having higher adhesiveness) can be achieved. The upper limit of the softening point of the tackifier resin is not particularly limited, but can be made, for example, to be approximately 170°C or lower (typically approximately 160°C or lower). In a tackifier resin having a softening point higher than 170°C, there can be a tendency that the compatibility with an acrylic polymer may be decreased.

The softening point of a tackifier resin is defined as the value measured by a ring and ball method (e.g. , the ring and ball method specified in JIS K 5902).

The content of the tackifier resin in the pressure-sensitive adhesive layer 30 is not particularly limited, but can be appropriately set in accordance with the pressure-sensitive adhesive performance (adhesive force, etc.) to be achieved. The content thereof is preferably, for example, within a range of 5 to 50 parts by mass, and more preferably within a range of 10 to 45 parts by mass, based on 100 parts by mass of the resin solid of the acrylic pressure-sensitive adhesive contained in the pressure-sensitive adhesive layer 30. If the content is less than 5 parts by mass, there is the fear that the adhesive force of the pressure-sensitive adhesive layer 14 may be insufficient. If the content is more than 50 parts by mass, it becomes impossible to clearly release the pressure-sensitive adhesive tape 10 from an adherend when the tape 10 is peeled off from the adherend, thereby causing the fear that the adhesive may remain on the adherend.

The aforementioned pressure-sensitive adhesive composition may further contain other publicly-known additives. For example, powders, such as colorant or pigment, dye, surfactant, plasticizer, surface lubricant, leveling agent, surfactant, softener, antistatic agent, inorganic or organic filler, metallic powder, or particle-shaped or foil-shaped substance, can be appropriately added in accordance with an application in which the pressure-sensitive adhesive tape 10 is used. The blending amount of these optional components can be the amount typically used in the field of pressure-sensitive adhesive tapes.

### (Thickness of Substrate Layer and Pressure-Sensitive Adhesive Layer)

In the pressure-sensitive adhesive tape 10 according to the embodiment, the total thickness of the substrate layer 20 and the pressure-sensitive adhesive layers 30a and 30b is 2 to 10 µm, and preferably less than 5 µm (e.g., 2 to 4.9 µm). Accordingly, the pressure-sensitive adhesive tape 10 can be used in an adhesion site in an extremely-thin layer structure.

The average thickness of each of the pressure-sensitive adhesive layers 30a and 30b of which the pressure-sensitive adhesive tape 10 is composed can be appropriately selected in view of the total thickness of the tape. The average thickness of the pressure-sensitive adhesive layer is 1.0 to 3.5 µm, preferably 3.0 µm or less (e.g., 1.0 to 2.5 µm), and more preferably 2.0 µm or less (e.g., 1.0 to 1.8 µm). Herein, the "average thickness of the pressure-sensitive adhesive layer" means a value measured by the later-described method.

When the average thickness of each of the pressure-sensitive adhesive layers 30a and 30b is 3.5 µm, the thickness of the substrate layer 20 is 3 µm or less. Further, the standard deviation of the thickness of each of the pressure-sensitive adhesive layers 30a and 30b is 25% or less, preferably 20% or less, and more preferably 15% or less, based on the average thickness of each of the pressure-sensitive adhesive layers. By making the standard deviation of the thickness of the pressure-sensitive adhesive layer to be 25% or less, a variation in the pressure-sensitive adhesive force, occurring depending on places, can be suppressed even in an extremely-thin pressure-sensitive adhesive tape having a total thickness of 10 µm or less, thereby improving the stability of the pressure-sensitive adhesive force. The "standard deviation of the thickness of the pressure-sensitive adhesive layer" means a value measured by the later-described method.

In the two pressure-sensitive adhesive layers formed on both surfaces of the substrate layer, the thickness of each of the pressure-sensitive adhesive layers (pressure-sensitive adhesive layer on the front surface side, that on the back surface side) is not particularly limited, but can be appropriately selected in accordance with an application. The thickness of each of the two pressure-sensitive adhesive layers formed on both surfaces of the substrate layer may or may not be the same as each other, but in many cases, they are selected to be the same or almost the same as each other.

The thickness of the substrate layer can be appropriately selected in view of the total thickness of the pressure-sensitive adhesive tape. The thickness thereof is, for example, 6.5 µm or less (e.g., 1.0 to 6.5 µm), preferably 5.0 µm or less (e.g., 1.0 to 5.0 µm), and more preferably 3.0 µm or less (e.g. , 1. 0 to 3.0 µm). It is preferable that the thickness of the substrate layer 20 is 1.0 µm or more, in terms of maintaining the strength of the pressure-sensitive adhesive tape 10.

According to the pressure-sensitive adhesive tape 10 of the present embodiment, a variation in the pressure-sensitive adhesive force, occurring depending on places, can be suppressed, and hence the stability of the pressure-sensitive adhesive force can be improved, although the thickness of the substrate layer 20 and the pressure-sensitive adhesive layer 30 is 10 µm or less (more preferably less than 5 µm). Therefore, according to the pressure-sensitive adhesive tape 10 of the embodiment, adhesion reliability can be sufficiently obtained in an adhesion site in an extremely-thin layer structure in which adhesion has been difficult with a conventional pressure-sensitive adhesive tape.

In the present embodiment, the pressure-sensitive adhesive tape 10 is a double-sided pressure-sensitive adhesive tape in which pressure-sensitive adhesive layers are formed on both sides of a substrate layer; however, the tape 10 may be a single-sided pressure-sensitive adhesive tape in which a pressure-sensitive adhesive layer is formed only on one side of a substrate layer.

### (Release Liner)

In the double-sided pressure-sensitive adhesive tape or sheet according to the present embodiment, a release liner for protecting the adhesive surface of the pressure-sensitive adhesive layer can be provided before the tape or sheet is used. Such a release liner is not particularly specified, but can be appropriately selected from publicly-known release liners. Specific examples of the release liner may include those made of, for example, plastic films having themselves high release property [e.g., polyolefin films made of polyolefin resins consisting of polyethylene (low density polyethylene, linear low density polyethylene, etc.), polypropylene, ethylene-α-olefin copolymers (block copolymers or random copolymers), such as ethylene-propylene copolymers, and mixtures thereof; and films made of fluorine resins, etc.]. Among them, release liners each having a configuration in which a release treatment layer has been formed on the surface (s) (one surface or both surfaces) of various substrate layers can be preferably used.

A plastic film is preferably used as the substrate of the release liner, but paper (e.g., Japanese paper, foreign paper, glassine paper, or the like), nonwoven fabric or cloth, foaming body, metallic foil, composite substrate made of various substrates (e.g. , metal vapor deposition plastic film, etc.) may also be used. The thickness of the substrate can be appropriately selected in accordance with a target, but is generally within a range of approximately 10 to 500 µm. Examples of the material of the plastic film used as the substrate of the release liner include thermoplastic resins consisting of: polyesters, such as polyethylene terephthalate; polyolefins, such as polypropylene, polyethylene, and ethylene-propylene copolymer; polyvinyl chloride; polyimide; and polycarbonate, etc. The plastic film may be either of a non-oriented film and an oriented (mono-axially or bi-axially oriented) film.

In addition, the release treatment layer can be formed by using a release treatment agent (e.g. , a silicone release agent, fluorine release treatment agent, long-chain alkyl release treatment agent, or the like), which is publicly-known or commonly-used as a release treatment agent for forming a release treatment layer in a release liner. Alternatively, the release treatment layer may be formed by laminating or coating, on the substrate layer: a polyolefin film made of a polyolefin resin, such as polyethylene, polypropylene, and an ethylene-α-olefin copolymer including an ethylene-propylene copolymer, or the like; or a film made of a fluorine resin. In the release liner, the release treatment layer may be provided on one surface or both surfaces of the substrate, as stated above.

By adjusting the release force of the release liner with respect to the pressure-sensitive adhesive layer to be 1 N/50 mm or less, deformation of the double-sided pressure-sensitive adhesive tape or sheet, possibly occurring during adhesion work (work for releasing the release liner), can be suppressed or prevented, thereby allowing the workability to be improved. A release liner and the release force thereof can be appropriately selected or adjusted in accordance with an application, etc. , and are not particularly limited.

The double-sided pressure-sensitive adhesive tape or sheet according to the present embodiment may have a laminated form in which sheets have been laminated together, or have a wound form in which a sheet has been wound into a roll shape. For example, the double-sided pressure-sensitive adhesive tape or sheet having a roll-shaped wound form can be produced by using, as the release liner, a long belt-shaped release liner whose both surfaces are release treatment surfaces, and by laminating the release liner onto the long belt-shaped double-sided pressure-sensitive adhesive tape or sheet, so that one of the release treatment surfaces of the release liner is overlapped onto the adhesive surface of one of the pressure-sensitive adhesive layers of the tape or sheet and the other release treatment surface of the release liner is overlapped onto the adhesive surface of the other pressure-sensitive adhesive layer thereof, and then by winding the overlapped tape or sheet into a roll shape. Alternatively, the double-sided pressure-sensitive adhesive tape or sheet having a roll-shaped wound form can be produced by using, as the release liner, two long belt-shaped release liners, only one surface of each of which is a release treatment surface, and by protecting the adhesive surface of one of the pressure-sensitive adhesive layers of the long belt-shaped double-sided pressure-sensitive adhesive tape or sheet with one of the release liners and by protecting the adhesive surface of the other pressure-sensitive adhesive layer thereof with the other release liner, and then by winding the protected tape or sheet into a roll shape.

The length of the double-sided pressure-sensitive adhesive tape or sheet having such a roll-shaped wound form is not particularly limited, as far as the tape or sheet has a long belt shape, but is usually 5 m or longer (preferably 10 m or longer, and more preferably 20 m or longer).

### (Method of Manufacturing Pressure-Sensitive Adhesive Tape)

The pressure-sensitive adhesive tape according to the embodiment can be produced by a manufacturing method comprising, for example, the following steps (A) to (C).
Step (A): step of forming a pressure-sensitive adhesive layer on a release liner by applying a pressure-sensitive adhesive on the release treatment surface of the release liner
Step (B): step of forming a first pressure-sensitive adhesive layer on a substrate layer by pasting the pressure-sensitive adhesive layer formed on the release liner to one of the surfaces of the substrate layer
Step (C): step of forming a second pressure-sensitive adhesive layer on the substrate layer by applying the pressure-sensitive adhesive on the other surface of the substrate layer

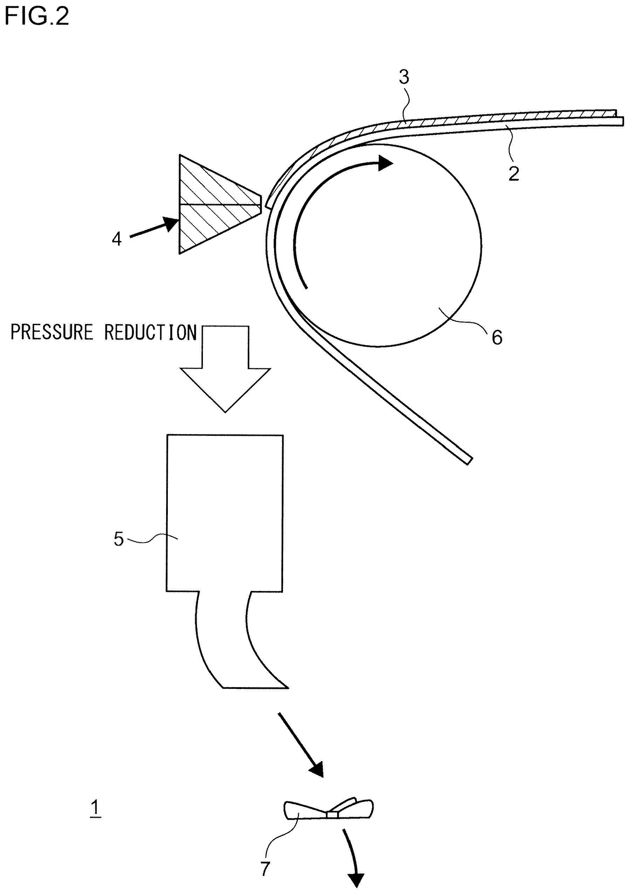

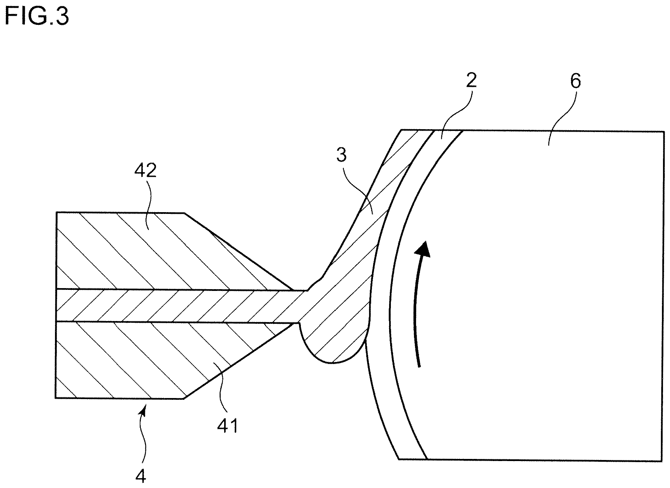

The step of applying the pressure-sensitive adhesive to support bodies, such as the substrate layer and the release liner, is performed by using a coating apparatus illustrated in Figs. 2 and 3.

Specifically, the coating apparatus 1 comprises: a rotating drum 6 for transporting a support body 2; a die coater 4 for applying a coating liquid (pressure-sensitive adhesive) 3 to the support body 2 to be transported along the rotating drum 6; and a vacuum box 5 for making the air pressure PU on the upstream side in the flow direction of the support body 2 (hereinafter, also referred to as upstream air pressure) to be reduced from the atmospheric pressure (i.e., downstream air pressure PD).

The vacuum box 5 is configured such that the gas inside of it is sucked out through an exhaust duct connected to a suction fan 7. The air pressure PU is controlled so as to be a predetermined negative pressure by the gap between the support body 2 and the tip of the vacuum box 5, the gap between the die coater 4 and the tip of the vacuum box 5, and the amount of the air sucked by the suction fan 7.

On the other hand, the die coater 4 includes: an upstream die lip 41 arranged on the upstream side in the flow direction of the support body 2; and a downstream die lip 42 arranged on the downstream side in the same direction. The coating liquid (pressure-sensitive adhesive) discharged from the gap between the upstream die lip 41 and the downstream die lip 42 is applied onto the support body 2.

By applying pressure-sensitive adhesive to a support body, such as a substrate layer, a release liner, or the like, using the coating apparatus having pressure-reducing means as illustrated in Fig. 2, the standard deviation of the thickness of a pressure-sensitive adhesive layer formed on the support body can be made to be 25% or less, while the average thickness of the pressure-sensitive adhesive layer is made to be 3.5 µm or less.

### Example

Hereinafter, the present embodiment will be described in detail based on examples, but the invention is not limited by these examples.

### (Preparation of Pressure-Sensitive Adhesive)

An acrylic polymer having a weight average molecular weight of 500, 000 was obtained by solution-polymerizing 70 parts of n-butyl acrylate, 27 parts of 2-ethylhexyl acrylate, 3 parts of acrylic acid, and 0.1 parts of 2-hydroxyethyl acrylate for six hours in a mixed solution of toluene and ethyl acetate [toluene/ethyl acetate (mass ratio) = 1/1] with the use of 0.2 parts of azobisisobutyronitrile as a polymerization initiator. A pressure-sensitive adhesive (sometimes referred to as a pressure-sensitive adhesive composition; "adhesive A") was prepared by adding 30 parts of a polymerized rosin pentaerythritol ester resin (Product Name: "PENSEL D125" made by Arakawa Chemical Industries, Ltd., softening point: 125°C) and 2 parts of isocyanate cross-linking agent (Product Name: "CORONATE L" made by Nippon Polyurethane Industry Co., Ltd.) to 100 parts of the above acrylic polymer, and then by agitating and mixing them to be uniform.

### (Example 1)

A pressure-sensitive adhesive tape (double-sided pressure-sensitive adhesive tape, total thickness: 5.0 µm, width: 480 mm, winding length: 1000 m), which had been wound into a roll shape, was produced by forming pressure-sensitive adhesive layers each having a thickness of 1.5 µm on both surfaces of a polyester film (Product Name: "C660-2.0W" made by Mitsubishi Chemical Polyester Co. , Ltd. , thickness: 2.0 µm), which was used as a substrate layer, with the use of the above adhesive A, and then by winding the film into a roll shape. When the adhesive A was applied, the upstream air pressure PU was reduced by 0.1 to 2.0 kPa.

### (Example 2)

A pressure-sensitive adhesive tape (double-sided pressure-sensitive adhesive tape, total thickness: 4.4 µm, width: 480 mm, winding length: 1000 m), which had been wound into a roll shape, was produced by forming pressure-sensitive adhesive layers each having a thickness of 1.5 µm on both surfaces of a polyester film (Product Name: "SC75" made by SKC Co., Ltd., thickness: 1. 4 µm), which was used as a substrate layer, with the use of the above adhesive A, and then by winding the film into a roll shape. When the adhesive A was applied, the upstream air pressure PU was reduced by 0.1 to 2.0 kPa.

### (Comparative Examples 1 and 2)

Each of the pressure-sensitive adhesive tapes of Comparative Examples 1 and 2 is the same as that of Example 1 in that a polyester film having a thickness of 2.0 µm has been used as a substrate layer and pressure-sensitive adhesive layers have been formed on both sides of the substrate layer such that the thickness of the layer is 1.5 µm, but different from that in a manufacturing method.

The method of producing the pressure-sensitive adhesive tape of each of Comparative Examples 1 and 2 conforms to the aforementioned method of manufacturing the pressure-sensitive adhesive tape of Example 1. However, in the method of producing the pressure-sensitive adhesive tape of Comparative Example 1, air pressure was not reduced when the adhesive A was applied, and hence the upstream air pressure PU was equal to the atmospheric pressure. In the method of producing the pressure-sensitive adhesive tape of Comparative Example 2, a roll coating method was adopted instead of the coating method using the coating apparatus illustrated in Fig. 2.

### (Evaluation of Thickness of Pressure-Sensitive Adhesive Layer)

The average and standard deviation of the thickness of the pressure-sensitive adhesive layer in the pressure-sensitive adhesive tape of each of Examples 1 and 2 and Comparative Examples 1 and 2, was calculated by the following procedures.
(1) In 48 divisions of a pressure-sensitive adhesive tape (size of one division is 80 mm in width × 125 m in length) obtained by dividing the longitudinal direction of the pressure-sensitive adhesive tape having a size of 480 mm in width × 1000 m in length into 8 intervals and further by dividing the width direction of each interval into 6 intervals, total thickness of the tape is measured at two places in every division. The total thickness thereof is measured by using a linear gauge with a minimum division of 1/10000 mm (D-10HS made by OZAKI MFG. CO., LTD.). In calculating the average and standard deviation of the thickness of a pressure-sensitive adhesive layer, the number of the measured total thicknesses of a pressure-sensitive adhesive tape may be 96 or more.
(2) The thickness of a single pressure-sensitive adhesive layer is calculated by subtracting the thickness of a substrate layer from the total thickness measured in the above (1) and then by dividing the obtained value by 2. The thickness of a pressure-sensitive adhesive layer, calculated by the aforementioned calculation method, was equivalent to that observed with a scanning electron microscope. Thereby, it has been confirmed that it is proper to calculate the thickness of a pressure-sensitive adhesive layer by neglecting the tolerance of the thickness of a substrate layer (normally, approximately ±0.2 µm), as in the aforementioned calculation method.

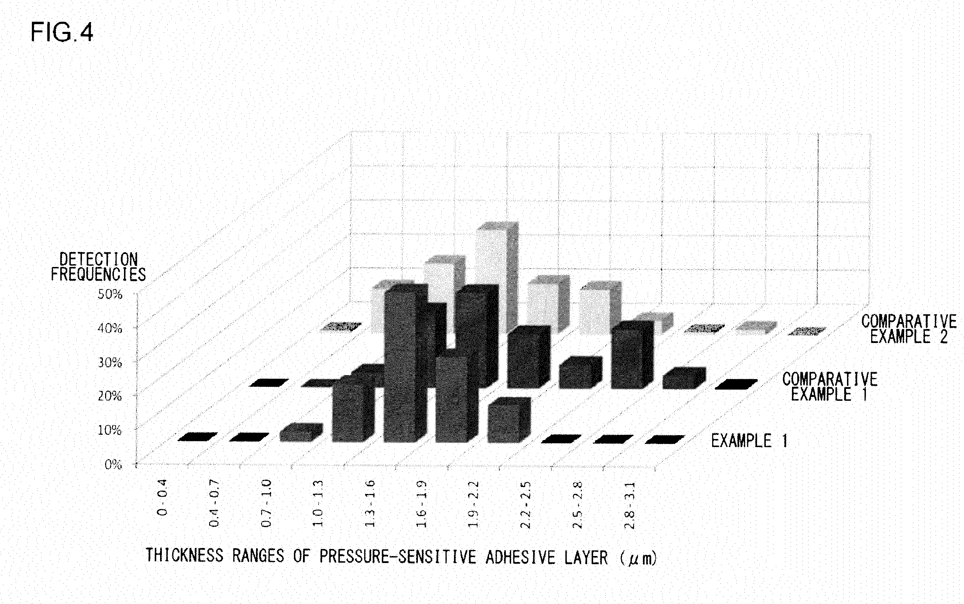

In the pressure-sensitive adhesive tape of each of Examples 1 and 2 and Comparative Examples 1 and 2, the thickness at the 96 places in the pressure-sensitive adhesive layer was calculated by the aforementioned calculation method. Fig. 4 is a graph illustrating detection frequencies of the thickness of the pressure-sensitive adhesive layer in the pressure-sensitive adhesive tape of each of Examples 1 and 2 and Comparative Examples 1 and 2. Further, the average A and standard deviation B of the thickness of the pressure-sensitive adhesive layer in each tape were calculated. Further, the index represented by "the standard deviation B of the thickness of the pressure-sensitive adhesive layer/the average thickness A thereof" was calculated from obtained results. Obtained results are shown in Table 1.

**[Table 1]**

| | EXAMPLE 1 | EXAMPLE 2 | COMPARATIVE EXAMPLE 1 | COMPARATIVE EXAMPLE 2 |
|---|---|---|---|---|
| AVERAGE THICKNESS OF PRESSURE-SENSITIVE ADHESIVE LAYER A (*µ*m) | 1.7 | 1.6 | 1.7 | 1.2 |
| STANDARD DEVIATION OF THICKNESS OF PRESSURE-SENSITIVE ADHESIVE LAYER B (*µ*m) | 0.3 | 0.3 | 0.5 | 0.4 |
| B/A × 100(%) | 18 | 19 | 29 | 33 |

As shown in Table 1, it has been confirmed that: the ratio of the standard deviation of the thickness of the pressure-sensitive adhesive layer in the pressure-sensitive adhesive tape of each of Examples 1 and 2 to the average thickness thereof was remarkably reduced in comparison with that in the pressure-sensitive adhesive tape of each of Comparative Examples 1 and 2. In other words, a variation in the thickness of the pressure-sensitive adhesive layer in the pressure-sensitive adhesive tape of each of Examples 1 and 2 is greatly reduced in comparison with that in the pressure-sensitive adhesive tape of each of Comparative Examples 1 and 2. Thereby, the pressure-sensitive adhesive tape of each of Examples 1 and 2 has an effect of suppressing a variation in the pressure-sensitive adhesive force, occurring depending on places, although the thickness of the tape is as extremely-thin as 10 µm or less.

## Claims

1. A pressure-sensitive adhesive tape,
wherein the total thickness of a plastic or metal substrate layer and a pressure-sensitive adhesive layer is such that 2 µm ≤ total thickness ≤10 µm, and
wherein the average thickness of the pressure-sensitive adhesive layer is such that 1 µm ≤ average thickness ≤ 3.5 µm, and
wherein the standard deviation of the thickness of the pressure-sensitive adhesive layer, obtained by measuring the total thickness of the pressure-sensitive adhesive tape at least at 96 places, namely, at places in each of 48 divisions obtained by dividing the longitudinal direction of the pressure-sensitive tape having a size of 480 mm in width x 1000 m in length into 8 intervals and further by dividing the width direction of each interval into 6 intervals so that each division has a size of 80 mm in width x 125 m in length, is 25% or less the average thickness of the pressure-sensitive adhesive layer,
wherein the pressure-sensitive adhesive layer is made of a pressure-sensitive composition containing a (meth)acrylic polymer and a crosslinking agent,
wherein the (meth)acrylic polymer contains, as monomer components, a (meth)acrylic monomer with an alkyl group having 1 to 14 carbon atoms as a major component, a carboxyl group-containing monomer, and a hydroxyl group-containing monomer, and
wherein the (meth)acrylic monomer with an alkyl group having 1 to 14 carbon atoms contains a (meth)acrylic monomer with an acrylic group having 1 to 4 carbon atoms in an amount within a range of 40 to 80% by mass, based on the total mass of the (meth)acrylic polymer with an alkyl group having 1 to 14 carbon atoms.

2. The pressure-sensitive adhesive tape according to claim 1, wherein
the pressure-sensitive adhesive layer contains a tackifier resin.

3. The pressure-sensitive adhesive tape according to claim 2, wherein
the content of the tackifier resin is within a range of 5 to 50 parts by mass based on 100 parts by mass of the resin solid in the acrylic pressure-sensitive adhesive layer.

4. The pressure-sensitive adhesive tape according to claim 2 or 3, wherein
the tackifier resin is a rosin tackifier resin.

5. The pressure-sensitive adhesive tape according to any one of claims 1 to 4, wherein
the total thickness of the substrate layer and the pressure-sensitive adhesive layer is less than 5 µm.

6. The pressure-sensitive adhesive tape according to any one of claims 1 to 5, wherein
the pressure-sensitive adhesive layers are provided on both sides of the substrate layer.

7. Use of the pressure-sensitive adhesive tape according to any one of claims 1 to 6 for fixing a part of a mobile electronic device.

## Patentansprüche

1. Haftklebeband,
wobei die Gesamtdicke einer Kunststoff- oder Metallsubstratschicht und einer Haftklebstoffschicht so ist, dass 2 µm ≤ Gesamtdicke ≤ 10 µm, und
wobei die mittlere Dicke der Haftklebstoffschicht so ist, dass 1 µm ≤ mittlere Dicke ≤ 3,5 µm, und
wobei die Standardabweichung der Dicke der Haftklebstoffschicht, erhalten durch Messen der Gesamtdicke des Haftklebebandes wenigstens an 96 Stellen, nämlich an Stellen in jedem von 48 Abschnitten, die durch Teilen der Längsrichtung des Haftklebebandes mit einer Größe von 480 mm Breite x 1000 m Länge in 8 Intervalle und weiterhin durch Teilen der Breitenrichtung von jedem Intervall in 6 Intervalle erhalten werden, so dass jeder Abschnitt eine Größe von 80 mm Breite x 125 m Länge aufweist, 25 % oder weniger der mittleren Dicke der Haftklebstoffschicht beträgt,
wobei die Haftklebstoffschicht aus einer druckempfindlichen Zusammensetzung gebildet ist, die ein (Meth)acrylpolymer und ein Vernetzungsmittel enthält,
wobei das (Meth)acrylpolymer als Monomerkomponenten ein (Meth)acrylmonomer mit einer Alkylgruppe, die 1 bis 14 Kohlenstoffatome aufweist, als eine Hauptkomponente, ein eine Carboxylgruppe enthaltendes Monomer und ein eine Hydroxylgruppe enthaltendes Monomer enthält, und
wobei das (Meth)acrylmonomer mit einer Alkylgruppe, die 1 bis 14 Kohlenstoffatome aufweist, ein (Meth)acrylmonomer mit einer Acrylgruppe, die 1 bis 4 Kohlenstoffatome aufweist, in einer Menge in einem Bereich von 40 bis 80 Massenprozent, bezogen auf die Gesamtmasse des (Meth)acrylpolymers mit einer Alkylgruppe, die 1 bis 14 Kohlenstoffatome aufweist, enthält.

2. Haftklebeband gemäß Anspruch 1, wobei
die Haftklebstoffschicht ein Klebrigmacherharz enthält.

3. Haftklebeband gemäß Anspruch 2, wobei der Gehalt des Klebrigmacherharzes in einem Bereich von 5 bis 50 Massenteilen, bezogen auf 100 Massenteile des Harzfeststoffs in der Acrylhaftklebstoffschicht, liegt. -

4. Haftklebeband gemäß Anspruch 2 oder 3, wobei das Klebrigmacherharz ein Kolophonium-Klebrigmacherharz ist.

5. Haftklebeband gemäß einem der Ansprüche 1 bis 4, wobei die Gesamtdicke der Substratschicht und der Haftklebstoffschicht weniger als 5 µm beträgt.

6. Haftklebeband gemäß einem der Ansprüche 1 bis 5, wobei die Haftklebstoffschichten auf beiden Seiten der Substratschicht bereitgestellt sind.

7. Verwendung des Haftklebebandes gemäß einem der Ansprüche 1 bis 6 zum Befestigen eines Teils einer mobilen elektronischen Vorrichtung.

## Revendications

1. Ruban adhésif sensible à la pression,
dans lequel l'épaisseur totale d'une couche de substrat en plastique ou en métal et d'une couche d'adhésif sensible à la pression est telle que 2 µm ≤ épaisseur totale ≤ 10 µm, et
dans lequel l'épaisseur moyenne de la couche d'adhésif sensible à la pression est telle que 1 µm ≤ épaisseur moyenne ≤ 3,5 µm, et
dans lequel l'écart-type de l'épaisseur de la couche d'adhésif sensible à la pression, obtenu en mesurant l'épaisseur totale du ruban adhésif sensible à la pression en au moins 96 endroits, à savoir, en des endroits dans chacune de 48 divisions obtenues en divisant le sens longitudinal du ruban adhésif sensible à la pression ayant une taille de 480 mm de large x 1000 m de long en 8 intervalles et en divisant ensuite le sens de la largeur de chaque intervalle en 6 intervalles de telle sorte que chaque division a une taille de 80 mm de large x 125 m de long, est inférieur ou égal à 25 % de l'épaisseur moyenne de la couche d'adhésif sensible à la pression,
dans lequel la couche d'adhésif sensible à la pression est constituée d'une composition sensible à la pression contenant un polymère (méth)acrylique et un agent de réticulation,
le polymère (méth)acrylique contenant, en tant que composants monomères, un monomère (méth)acrylique avec un groupe alkyle ayant de 1 à 14 atomes de carbone en tant que composant majoritaire, un monomère contenant un groupe carboxyle et un monomère contenant un groupe hydroxyle, et
le monomère (méth)acrylique avec un groupe alkyle ayant de 1 à 14 atomes de carbone contenant un monomère (méth)acrylique avec un groupe acrylique ayant de 1 à 14 atomes de carbone en une quantité dans une fourchette de 40 à 80 % en masse, sur la base de la masse totale du polymère (méth)acrylique avec un groupe alkyle ayant de 1 à 14 atomes de carbone.

2. Ruban adhésif sensible à la pression selon la revendication 1, dans lequel
la couche d'adhésif sensible à la pression contient une résine apportant du collant.

3. Ruban adhésif sensible à la pression selon la revendication 2, dans lequel
la teneur en résine apportant du collant est dans une fourchette allant de 5 à 50 parties en masse sur la base de 100 parties en masse de solide de résine dans la couche d'adhésif acrylique sensible à la pression.

4. Ruban adhésif sensible à la pression selon la revendication 2 ou 3, dans lequel
la résine apportant du collant est une résine apportant du collant à base de colophane.

5. Ruban adhésif sensible à la pression selon l'une quelconque des revendications 1 à 4, dans lequel
l'épaisseur totale de la couche de substrat et de la couche d'adhésif sensible à la pression est inférieure à 5 µm.

6. Ruban adhésif sensible à la pression selon l'une quelconque des revendication 1 à 5, dans lequel
les couches d'adhésif sensible à la pression sont fournies sur les deux côtés de la couche de substrat.

7. Utilisation du ruban adhésif sensible à la pression selon l'une quelconque des revendications 1 à 6 pour fixer une pièce d'un dispositif électronique mobile.
